# EUROPÄISCHE PATENTSCHRIFT

(11) **EP 1 900 083 B1**
(45) Veröffentlichungstag und Bekanntmachung des Hinweises auf die Patenterteilung: **17.04.2019**
(21) Anmeldenummer: 06763163.0
(22) Anmeldetag: 17.05.2006
(51) Int. Cl.: H02K 7/116

(54) **ELEKTROMOTOR UND GETRIEBE-ANTRIEBSEINHEIT FÜR STELLANTRIEBE IM KRAFTFAHRZEUG**
ELECTRIC MOTOR AND GEARING/DRIVE UNIT FOR ACTUATORS IN A MOTOR VEHICLE
MOTEUR ELECTRIQUE ET UNITE D'ENTRAINEMENT A ENGRENAGE POUR DES MECANISMES DE COMMANDE DANS UN VEHICULE A MOTEUR

(30) Priorität: 29.06.2005 DE 102005030217
(43) Veröffentlichungstag der Anmeldung: 19.03.2008
(73) Patentinhaber: ROBERT BOSCH GMBH, 70442 Stuttgart (DE)
(72) Erfinder: OBERLE, Hans-Juergen, 76437 Rastatt (DE); SCHWENDEMANN, Franz, 77833 Ottersweier (DE); BERNAUER, Christof, 76596 Hundsbach (DE); SCHEER, Dieter, 77830 Buehlertal (DE)
(86) Internationale Anmeldenummer: PCT/EP2006/062373
(87) Internationale Veröffentlichungsnummer: WO 2007/000378

(56) Entgegenhaltungen:
- EP-A2- 0 082 375
- EP-A2- 0 177 001
- EP-A2- 1 184 958
- WO-A-2005/109607
- DE-A1- 4 116 791
- DE-A1- 10 332 757
- DE-U- 1 895 968
- FR-A1- 2 358 583
- FR-A1- 2 533 084
- GB-A- 1 450 447
- US-A- 4 283 645

## Beschreibung

### Stand der Technik

Die Erfindung betrifft einen Elektromotor und eine Getriebe-Antriebseinheit zur Verwendung in Verstellvorrichtungen im Kraftfahrzeug nach der Gattung der unabhängigen Ansprüche.

Mit der DE 100 19 512 A1 ist ein Fensterheberantrieb bekannt geworden, dessen Gehäuse einen Poltopf und ein den Poltopf abschließendes Gehäuse umfasst. Das den Poltopf abschließende Gehäuse ist hierbei ein Getriebegehäuse mit einem integrierten Elektronikgehäuse, wobei zwischen den beiden Gehäuseteilen als Bürstenhalter ein separates Bauteil angeordnet ist, das gleichzeitig als Dichtung zwischen den beiden Gehäuseteilen dient. Der Poltopf besteht aus einem tiefgezogenen abgeflachten zylindrischen Rohr, an dessen offenem Ende ein Flansch angeformt ist, in dem Löcher zur Aufnahme von Schrauben ausgespart sind. Im Flansch des Getriebegehäuses sind Sackgewinde ausgeformt, in die die Schrauben eingedreht werden, wodurch die beiden Gehäuseteile fest miteinander verbunden sind. Im Flansch des Poltopfs sind mehr Aufnahmen ausgeformt, als für die Verbindung mit einem Getriebegehäuse benötigt werden. Ein solcher Poltopf eignet sich daher zur Verbindung mit unterschiedlichen Getriebegehäusen mit verschiedenen Gegenaufnahmen, jedoch muss hierbei der Elektromotor immer axial in das Getriebegehäuse montiert und befestigt werden. Aus diesem Grunde eignet sich der hierbei verwendete offene Elektromotor nicht für den Einsatz ohne Getriebegehäuse.

Die EP 1 184 958 A2 beschreibt eine Antriebseinrichtung, bei der ein Elektromotor mit einem Getriebegehäuse verbunden ist. Dazu ist am offenen Rand des Poltopfes eine radiale Aussparung ausgestanzt, um zwei Stemmlappen auszubilden. Dabei wird das Getriebegehäuse mit einem Ringbund zuerst axial auf das Polgehäuse aufgesetzt, und anschließend die Stemmlappen radial um an dem Ringbund angeformte Stege nach innen gebogen.

### Vorteile der Erfindung

Der erfindungsgemäße Elektromotor und die erfindungsgemäße Getriebe-Antriebseinheit mit den Merkmalen der unabhängigen Ansprüche haben den Vorteil, dass durch das Ausformen der radialen Aussparung in dem Polgehäuse eine sehr einfache montierbare Verbindung eines Elektromotors mit einer kundenspezifischen kundenseitigen Getriebe-Schnittstelle sehr kostengünstig hergestellt werden kann. Dabei kann das Polgehäuse immer einheitlich hergestellt werden und im Baukastensystem mit unterschiedlichen Getriebegehäusen, Getriebe-Schnittstellen, Adapterelementen oder Befestigungsflanschen kombiniert werden. Die radialen Aussparungen können dabei weltweit einheitlich mittels einfachen Standardprozessen gefertigt werden, ohne dass zusätzliches Material aufgewendet werden muss. Bei der radialen Montage des Elektromotors in ein zweischaliges Getriebegehäuse wird der Elektromotor zuverlässig am Getriebegehäuse fixiert, indem an der Getriebe-Schnittstelle angeformte Befestigungsstege in die radialen Aussparungen greifen. Andererseits schließt der Lagerdeckel das Polgehäuse zuverlässig ab, so dass der Elektromotor universal auch ohne Kombination mit einem Getriebegehäuse verwendet werden kann. Durch die Ausführung des Getriebegehäuses als radial miteinander verbindbare Gehäuseteile können vorteilhaft schieberlose Spritzwerkzeuge bei der Herstellung verwendet werden, wodurch die Werkzeugkosten erheblich reduziert werden können. Die radiale Aussparung bildet eine kompakte, verbindungssteife Schnittstelle zwischen dem Elektromotor und beliebigen Gehäuseteilen und eignet sich daher besonders gut als universelle Anbindung für einen Basismotor. Außerdem erleichtert ein solches System die Demontierbarkeit einer solchen Antriebseinheit zu Zwecken der Reparatur oder des Recyclings.

Durch die in den Unteransprüchen ausgeführten Merkmale sind vorteilhafte Weiterbildungen der Vorrichtung nach den unabhängigen Ansprüchen möglich. Je nach Fertigungsmethode des Polgehäuses kann die radiale Aussparung sowohl an einem Ende am Mantel des Polgehäuses, als auch am Lagerdeckel des selben ausgeformt werden. Werden für den Lagerdeckel und den Mantel beispielsweise separate Stanzteile verwendet, können die radialen Aussparungen sehr günstig vor dem Zusammenbau des Polgehäuses ausgestanzt werden.

Wird das Polgehäuse mittels Tiefziehverfahren hergestellt, kann der Lagerdeckel sehr einfach einstückig an der Stirnseite des Mantels angeformt werden. Dadurch kann in einem Arbeitsschritt ein auf einer Seite geschlossener Poltopf hergestellt werden, wobei eine Öffnung für die aus dem Poltopf rausragende Ankerwelle freigespart wird. Durch die einteilige Ausbildung des Lagerdeckels mit dem Mantel des Polgehäuses kann das Kalottenlager und damit die Ankerwelle sehr genau mittig, innerhalb des Poltopfes angeordnet werden, wodurch die Montagetoleranzen zwischen dem Anker und dem Permanentmagneten reduziert werden.

Durch die Montage der beiden Lagerdeckel am Polgehäuse ist der Elektromotor auch ohne Getriebe als eigenständige Baueinheit verwendbar. Durch die Öffnung im Lagerdeckel wird eine effiziente Schnittstelle für die Kraftübertragung geschaffen. Dabei ragt die Ankerwelle durch die Öffnung aus dem Polgehäuse heraus, um mittels eines Abtriebselements eine Verstellvorrichtung anzutreiben. Alternativ greift zur Kraftkopplung eine Antriebswelle der Verstellvorrichtung durch die Öffnung formschlüssig in die Ankerwelle, die hierbei nicht aus dem Polgehäuse ragt.

Erfindungsgemäß kann eine solche radiale Aussparung mittels einer plastischen Kaltumformung erzeugt werden, indem ein bestimmter Wandabschnitt einfach mittels eines Stempelwerkzeugs eingedrückt wird. Bei diesem Prozess entstehen vorteilhafter Weise keine Abfälle, da Material nicht ausgeschnitten, sondern nur verformt wird. Dadurch wird die Formstabilität der radialen Aussparungen erhöht.

Ist der Außendurchmesser im Bereich der radialen Aussparung geringer als der Außendurchmesser des restlichen im Wesentlichen zylinderförmigen Polgehäuses, so kann auch der Durchmesser der entsprechenden Befestigungsstege der Getriebe-Schnittstelle kleiner ausgebildet werden, so dass der Außendurchmesser des Getriebegehäuses an der Verbindungsstelle den Durchmesser des Polgehäuses nicht überragt. Auf diese Weise kann der Bauraum des Getriebegehäuses im Verbindungsbereich reduziert werden.

Um den Elektromotor gegen ein Verdrehen im Getriebegehäuse oder im Befestigungsflansch zu sichern, bleiben zwischen den radialen Aussparung Bereiche des Polgehäuses unverformt bestehen, so dass diese einen Anschlag für die Befestigungsstege bezüglich der Umfangsrichtung bilden können. Hierzu ist keinerlei zusätzlicher Fertigungsaufwand notwendig.

Sind die radialen Aussparungen gegenüberliegend am Poltopf ausgebildet, so dass in diese entsprechende, sich gegenüberliegende radiale Stege eingreifen, ist der Elektromotor über den gesamten Umfang gleichmäßig fest an der Getriebe-Schnittstelle gesichert.

Um einen magnetischen Rückschluss zwischen den Permanentmagneten herzustellen, kann um den Polgehäuse-Mantel ein zweites Polrohr angeordnet werden, das den Polgehäuse-Mantel vollständig umschließt.

Zur eindeutigen Lagefixierung des Elektromotors gegenüber dem Getriebegehäuse und dem Befestigungsflansch ist am Lagerdeckel ein Zentrierzapfen angeformt, der beim Eingriff in eine entsprechende Gegenaussparung den Elektromotor radial zentriert. Dabei kann der Bereich des Lagedeckels, der im Innern beispielsweise ein Kalottenlager, ein Wälzlager oder eine Lagerhaltefeder aufnimmt, in axialer Richtung zylindrisch geformt werden, um konzentrisch zur Ankerwelle eine Zentrierung zu ermöglichen.

Die gesamte Getriebe-Antriebseinheit kann vorteilhaft radial montiert werden, indem der Elektromotor radial in einen Teil des Getriebegehäuses eingelegt wird, wobei mindestens ein Befestigungssteg des Getriebegehäuses in die mindestens eine radiale Aussparung des Polgehäuses eingreift. Durch das Verschließen des Getriebegehäuses mit einem radial montierbaren Deckel oder einer Halbschale, wird gleichzeitig zum Verschließen des Getriebegehäuses auch der Elektromotor dauerhaft gegenüber einer Relativbewegung zum Getriebegehäuse gesichert.

Durch die Verwendung eines halbschalförmigen Getriebegehäuses, können alle Bauteile der Antriebseinheit, einschließlich des Elektromotors in der selben radialen Richtung montiert werden, wodurch die Montagestraße deutlich einfacher aufgebaut werden kann.

Besonders günstig ist es, wenn am Getriebegehäuse (Grundkörper und Deckel) mindestens zwei, vorzugsweise vier Befestigungsstege angeformt sind, da dann ein Verkippen des Elektromotors in alle vier senkrecht zueinander liegenden Richtungen quer zu Ankerwelle verhindert werden kann.

Soll ein exakt baugleicher Elektromotor an verschiedenen Getriebe-Schnittstellen befestigt werden, weist das Adapterelement Befestigungsstege auf, die beispielsweise als Clips-Elemente ausgebildet sind, die in die radialen Aussparungen des Polgehäuses greifen. Dadurch kann ein universeller Basismotor sowohl in einem Getriebegehäuse, als auch in einem beliebigen Befestigungsflansch befestigt werden, ohne bauliche Änderungen am Elektromotor vorzunehmen. Damit bildet das Adapterelement praktisch die Schnittstelle zwischen dem Elektromotor und einer beliebigen Verstell-Mechanik (Getriebe- Schnittstelle).

### Zeichnungen

In der Zeichnung sind Ausführungsbeispiele der erfindungsgemäßen Vorrichtung dargestellt und in der nachfolgenden Beschreibung näher erläutert. Es zeigen
Figur 1 eine erfindungsgemäße Getriebe-Antriebseinheit im Schnitt,
Figur 2 zur Veranschaulichung des technologischen Hintergrunds einen Schnitt durch ein weiteres Ausführungsbeispiel mit Bajonett-Verbindung,
Figur 3 eine Ansicht eines weiteren erfindungsgemäßen Elektromotors,
Figur 4 zur Veranschaulichung des technologischen Hintergrunds einen Elektromotor mit Bajonett-Verbindung
Figur 5 einen Schnitt durch ein weiteres Ausführungsbeispiel mit einem Adapterelement und
Figur 6 eine als Befestigungsflansch ausgebildete Getriebe-Schnittstelle.

### Beschreibung der Ausführungsbeispiele

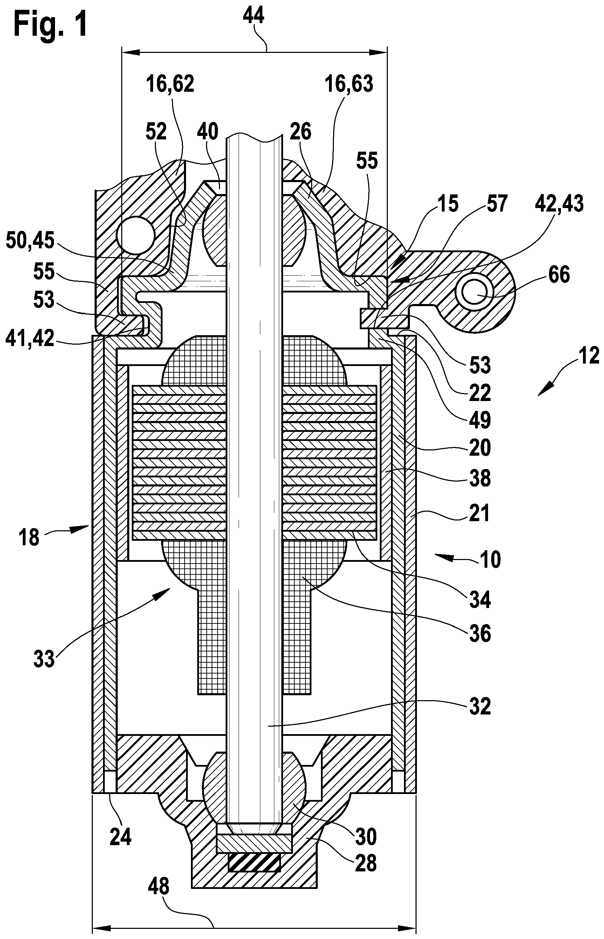

In Figur 1 ist eine Getriebe-Antriebseinheit 12 dargestellt, bei der ein separater Elektromotor 10 mit einer nur teilweise dargestellten Getriebe-Schnittstelle 15 verbunden ist, die als Getriebegehäuse 16 ausgebildet ist. Der Elektromotor 10 weist ein Polgehäuse 18 mit einem Polgehäuse-Mantel 20 und an dessen Stirnseiten 22, 24 angeformte Lagerdeckel 26, 28 auf. Die Lagerdeckel 26, 28 nehmen Lager 30 auf, die im Ausführungsbeispiel als Gleitlager, insbesondere als Kalottenlager ausgebildet sind, in denen mittels einer Ankerwelle 32 ein Anker 33 gelagert ist. Auf der Ankerwelle 32 ist ein Ankerpaket 34 mit elektrischen Wicklungen 36 angeordnet, die mit Permanentmagneten 38 zusammenwirken, die am Polgehäuse-Mantel 20 angeordnet sind. Die Ankerwelle 32 durchdringt an der Stirnseite 22 den Lagerdeckel 26, indem hierin ein Loch 40 in axialer Richtung angeordnet ist. Die Ankerwelle 32 ragt mit einem nicht näher dargestellten Abtriebselement in das Getriebegehäuse 16, um über ein nicht näher dargestelltes Getriebe - beispielsweise ein Schneckengetriebe - ein Antriebsmoment für bewegliche Teile im Kraftfahrzeug zur Verfügung zu stellen. Das Polgehäuse 18 ist im Ausführungsbeispiel mittels Tiefziehen eines Metallblechs hergestellt, wobei der Mantel 20 einstückig mit dem Lagerdeckel 26 ausgebildet ist. Hierbei wird der Anker 33 zuerst in das Polgehäuse 18 montiert und mit der Ankerwelle 32 durch die Öffnung 40 geschoben und anschließend der separate Lagerdeckel 28 montiert. Für bestimmte Anwendungen wird zusätzlich eine zweite Polgehäusewand 21 als Rückschlussring 21 auf dem Mantel 20 angeordnet. Im Bereich des Lagerdeckels 26 ist in der linken Bildhälfte eine radiale Aussparung 42 mittels plastischer Materialumformung 41 in die Gehäusewand 49 eingedrückt. Bei diesem Herstellungsprozess entsteht kein Materialabfall. Die radialen Aussparungen 42 sind in einem Bereich 57 des Polgehäuses 18 angeordnet, dessen Außendurchmesser 44 hierbei idealer Weise geringer ist, als der Außerdurchmesser 48 des Polgehäuse-Mantels 20. Der Bereich 45 des Lagerdeckels 26 ist als Zentrierzapfen 50 ausgebildet, der im montiertem Zustand in eine entsprechende Gegenaussparung 52 des Getriebegehäuses 16 eingreift. Zur Befestigung des Elektromotors 10 am Getriebegehäuse 16 greifen Befestigungsstege 53 des Getriebegehäuses 16 in die radialen Aussparungen 42 des Polgehäuses 18 ein. Die Befestigungsstege 53 liegen dabei axial an der Begrenzung der radialen Aussparung 42 an. Dadurch ist der Elektromotor 10 axial fest im Getriebegehäuse 16 fixiert. Der Elektromotor 10 wird beispielsweise radial in einer ersten Halbschale 62 des Getriebegehäuses 16 eingesetzt, so dass zumindest ein Befestigungssteg 53 in mindestens eine radiale Aussparung 42 eingreift. Nach dem Einführen des Elektromotors 10 in die ersten Halbschale 62 und der Montage des nicht dargestellten Getriebes, wird eine zweite Halbschale 63 radial zur Ankerwelle 32 auf die erste Halbschale 62 montiert und mit Verbindungselementen 66, die in Aufnahmen der beiden Getriebegehäuseteile 62, 63 greifen, miteinander verbunden. Dabei greift in Figur 1 mindestens ein weiterer Befestigungssteg 53 der zweiten Halbschale 63 in mindestens eine weitere radiale Aussparung 42 des Polgehäuses 18 ein. Die Befestigungsstege 53 oder die radialen Aussparungen 42 weisen hierbei keine Aufnahmen für Verbindungselemente zwischen dem Elektromotor 10 und dem Getriebegehäuse 16 auf, so dass der Elektromotor 10 allein durch die Verbindung der Getriebegehäuseteile 62 und 63 - bzw. eines Deckels 62 mit einem Gehäusegrundkörper 63 - zuverlässig mit diesen verbunden ist.

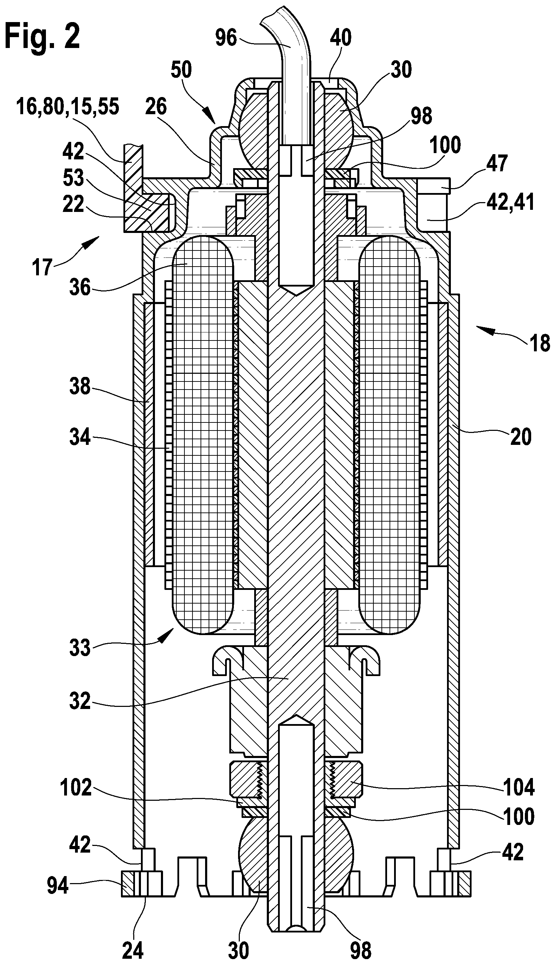

Der Elektromotor gemäß Figur 2 weist zur Veranschaulichung des technologischen Hintergrunds als mechanische Schnittstelle zur Verbindung mit dem Getriebegehäuse 16 oder der Getriebe-Schnittstelle 15 eine Art von Bajonett-Verschluss auf. Hierzu ist an die radiale Aussparung 42 eine axiale Aussparung 47 ausgeformt, in die der Befestigungssteg 53, der über eine axiale Halterung 55 an die Getriebe-Schnittstelle 15 angebunden ist, axial in das Polgehäuse einführbar ist. Bei der Montage wird der Elektromotor 10 zuerst axial in die korrespondierende Schnittstelle 15 geschoben und dann nach Art des Bajonett-Verschlusses um einen bestimmten Winkel verdreht und optional auch verrastet. Bei diesem Verbindungs-Typ muss das Gehäuse 16 keine mindestens zwei radial verbindbaren Halbschalen aufweisen, sondern kann beliebig als Bajonett-Verbindung geformt sein. Die radiale Aussparung 42 ist hierbei direkt in den Mantel 20 mittels plastischer Umformung eingedrückt, kann aber alternativ auch mittels Materialausschnitt - beispielsweise Ausstanzen - ausgeformt werden. Die radialen Aussparungen 42 sind am Ende des Polgehäuses 18 ausgebildet, an dem der Lagerdeckel 26 einstückig angeformt ist, sie können aber auch alternativ auch am anderen Ende angeformt sein, der mit einem separaten Lagerdeckel 28 zum Zusammenbau des Elektromotors 10 verschließbar ist. Hierzu weist der Mantel 20 biegbare Befestigungslaschen 94 auf, die um entsprechende Fortsätze des Lagerdeckels 28 geformt werden. Die Ankerwelle 32 erstreckt sich im Wesentlichen über die Länge des Polgehäuses 18, so dass zur Kraftankopplung ein Kopplungselement 96 (bspw. eine Flexwelle 96) durch die Öffnung 40 im Lagerdeckel 26 in ein Innenvielkant 98 (bspw. Ein Vierkant 98) der Ankerwelle 32 greift. Ein solcher Drehmomentabgriff ist optional an einer oder an beiden Seiten 22, 24 des Polgehäuses 18 möglich. Zwischen den Lagern 30 und dem Anker 33 sind Anlaufscheiben 100 vorzugsweise aus Kunststoff angeordnet, mit denn sich die Ankerwelle 32 axial an den Lagern 30 abstützt. Die Anlaufscheiben 100 sind dabei drehfest mit der Ankerwelle 32 bzw. mit den auf dieser angeordneten Ankerbauteile 102, wie beispielsweise einer Aufnahmehülse 102 für einen Ringmagneten 104, verbunden.

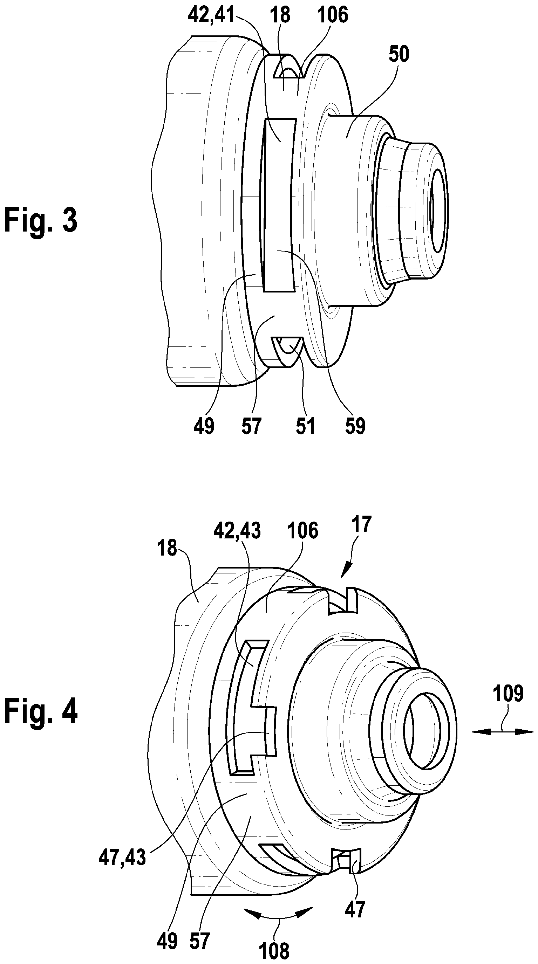

In Figur 3 ist ein Ausschnitt eines weiteren Elektromotors 10 dargestellt, bei dem die radialen Aussparungen 42 mittels plastischer Kaltumformung 41 in die Wand des Polgehäuses 18 eingedrückt sind. Dabei ist das Material der Polgehäusewand 49 nur eingedrückt und nicht ausgeschnitten, so dass kein Durchbruch durch die Wand 49 entsteht. In einer Variante wird die Wand 49 so stark verformt, dass dabei eine Öffnung (Schlitz 51) im Polgehäuse entsteht. Der eingedrückte Wandbereich 59 ist dabei als ebene Fläche ausgebildet, an der nach der Montage in die Getriebe-Schnittstelle 15 die Befestigungsstege 53 anliegen. Alternativ ist der Wandbereich 59 nach innen in das Polgehäuse 18 hinein gewölbt. In der Ausführung gemäß Figur 3 sind in den Poltopf 18 keine axialen Aussparungen 47 ausgeformt, da der Elektromotor 10 für die radiale Montage in ein Getriebegehäuse 16 mit einem Deckel, bzw. mit zwei Halbschalen 62, 63 ausgebildet ist.

Figur 4 zeigt zur Veranschaulichung des technologischen Hintergrunds ein Ausführungsbeispiel, bei dem die radialen Aussparungen 42 als Durchbrüche 43 in der Polgehäusewand 49 ausgebildet sind. Diese werden beispielsweise mittels Ausstanzen aus metallenem Tiefziehblech des Polgehäuses 18 ausgeformt. Zusätzlich zu den radialen Aussparungen 42 sind auch in axialer Richtung 109 axiale Aussparungen 47 ausgebildet, die mit den radialen Aussparungen 43 zusammen einen gemeinsamen - beispielsweise L-förmigen - Durchbruch 43 bilden. Die axialen Aussparungen 47 sind in einer nicht näher dargestellten Ausführungsvariante mittels plastischer Verformung ausgebildet, so dass sie zusammen mit den radialen Aussparungen 42 in die Gehäusewand 49 eingerückt sind. Die axialen Aussparungen 47 eignen sich für eine axiale Montage 109 des Elektromotors 10 in die Getriebe-Schnittstelle 15, insbesondere für einen Bajonett-Verschluss 17. Dabei werden die Befestigungsstege 53 axial in die axialen Aussparungen 47 eingeführt, und anschließend der Elektromotor 10 in Umfangsrichtung 108 gedreht, wobei die Befestigungsstege 53 in die radialen Aussparungen 42 in Umfangsrichtung 108 eingeschoben werden und den Elektromotor 10 zumindest axial fixieren. Zusätzlich kann eine Verriegelungsvorrichtung ausgebildet werden, die verhindert, dass sich der Elektromotor 10 im montierten Zustand ungewollt in Umfangsrichtung 108 zurückdreht.

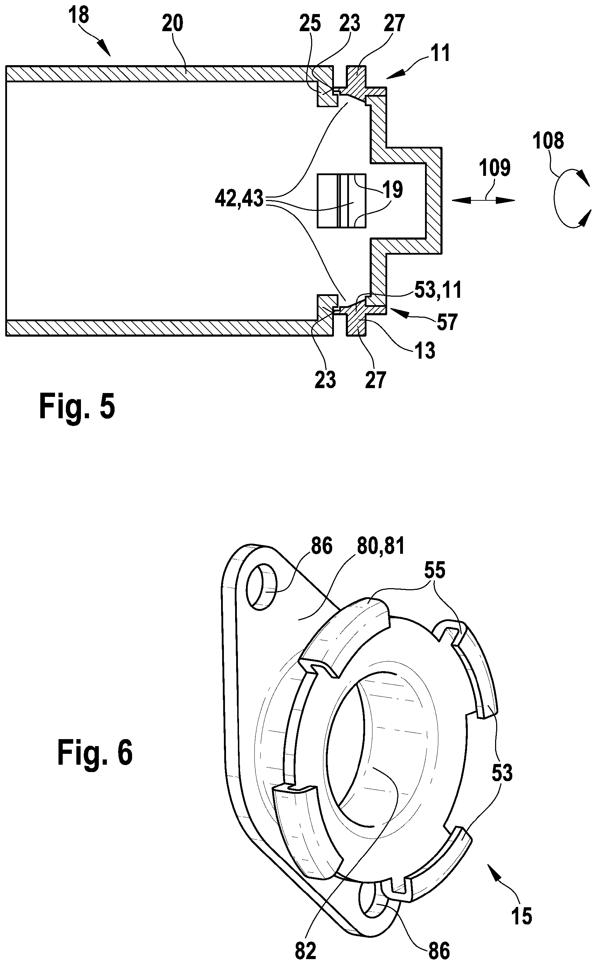

In Figur 5 ist ein weiteres Ausführungsbeispiel einer Getriebe-Antriebseinheit 12 dargestellt, bei dem der Elektromotor 10 nicht direkt im Getriebegehäuse 16 befestigt ist, sondern mit einem Adapterelement 13 verbunden ist. Das Adapterelement 13 weist ebenfalls Befestigungsstege 53 auf, die in die radialen Aussparungen 42 des Polgehäuses 18 eingreifen. Die Befestigungsstege 53 sind beispielsweise als Rastverbindung 11 ausgebildet. Wird das Adapterelement 13 in axialer Richtung 109 auf das Polgehäuse 18 aufgeschoben, gleiten die Befestigungsstege 53 über das Gehäuse 18, bis sie in die radialen Aussparungen 42 formschlüssig einrasten und das Adapterelement fest mit dem Polgehäuse 18 verbinden. Das Adapterelement 13 stützt sich dabei axial mit einer Anlagefläche 23 an einem Bund 25 des Polgehäuses und andererseits Mit dem Befestigungssteg 53 in der radialen Aussparung 42 ab. Die radialen Aussparungen 42 bilden auch einen Anschlag 19 für die Befestigungsstege 53 in Umfangsrichtung 108, so das das Adapterelement 13 auch gegen Verdrehen gesichert ist. Das Adapterelement 13 weist über seinen äußeren Umfang radiale Fortsätze 27 auf, mit denen das Adapterelement 13 mit einer Getriebe-Schnittstelle 15 - insbesondere über daran ausgeformte radiale Aussparungen - verbindbar ist. Mittels des Adapterelements 13 kann somit die Anordnung von den radialen Aussparungen 42 am Polgehäuse 18 und den Befestigungsstegen 53 an der Getriebe-Schnittstelle 15 ausgetauscht werden.

Figur 6 zeigt eine Getriebe-Schnittstelle 15, die als Befestigungsflansch 80 ausgebildet ist, der mit einer Getriebe-Antriebseinheit 12 bzw. einem Elektromotor 10 erfindungsgemäß verbindbar ist. Der Befestigungsflansch 80 weist Aufnahmen 86 für Verbindungsmittel zur Befestigung an einem Karosserieteil 15 auf. Der Befestigungsflansch 80 ist als einteiliges Biegestanzteil 81 ausgebildet und weist radiale Befestigungsstege 53 auf, die über axiale Halterungen 55 mit dem Befestigungsflansch 80 verbunden sind. Mittig innerhalb der Befestigungsstege 53 ist ein Loch 82 angeordnet, in den die Abtriebswelle 32, 96 und/oder der Zentrierzapfen 50 der Getriebeantriebseinheit 12 eingreifbar ist. Der Befestigungsflansch 80 wird bajonettartig zuerst axial aufgeschoben, wobei die radialen Befestigungsstege 53 des Befestigungsflansches 80 in die axialen Aussparungen 47 des Polgehäuses 18 eingreifen. Anschließend wird der Befestigungsflansch 80 in Umfangsrichtung 108 gegenüber dem Polgehäuse 18 gedreht, so dass die radialen Befestigungsstege 53 in die radialen Aussparungen 42 geschoben werden, die als Wanddurchbrüche 43 oder mittels plastischer Umformung 41 am Polgehäuse 18 ausgeformt sind.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann beispielsweise die konkrete Ausgestaltung der radialen Aussparung 42, sowie deren Anordnung am Polgehäuse 18 in Abhängigkeit von dessen Fertigungsverfahren variiert werden. Ebenso können die Befestigungsstege 53 sowohl für die Kombination mit einem Getriebegehäuse 16, als auch mit einem Adapterelement 13 beliebig geformt sein. Die Ausführung des Ankers 33, des Getriebegehäuses 16 und des Getriebes können dabei beliebigen bekannten Anwendungen entsprechen. Die Besonderheit der Erfindung besteht dabei darin, dass ein identischer Elektromotor 10 als Basismotor 10 für ein Baukastenprinzip zur Kombination mit verschiedenen Getriebe-Schnittstellen 15, wie Getriebegehäuse 16, Befestigungsflansche 80 oder Adapter 13 verwendet wird, ohne dass für die Verbindung zu der sich anschließenden Getriebe-Schnittstelle 15 separate Verbindungsmittel notwendig sind. Bevorzugt wird der erfindungsgemäße Elektromotor 10, bzw. die Getriebe-Antriebseinheit 12 für Sitzverstellvorrichtungen im Kraftfahrzeug eingesetzt, kann aber auch für beliebige andere Stellantriebe verwendet werden.

## Patentansprüche

1. Elektromotor (10) für Stellantriebe im Kraftfahrzeug mit einer Ankerwelle (32), die in einem Polgehäuse (18) gelagert ist, das einen Mantel (20) und an mindestens einer Stirnseite (22, 24) einen Lagerdeckel (26, 28) zur Aufnahme eines Lagers (30) für die Ankerwelle (32) aufweist, wobei am Polgehäuse (18) mindestens eine radiale Aussparung (42) ausgebildet ist, die nach dem kompletten Zusammenbau des Polgehäuses (18) für einen Eingriff von mindestens einem radialen Befestigungssteg (53) einer Getriebe-Schnittstelle (15) in das Polgehäuse (18) geeignet ist, um den Elektromotor (10) an der Getriebe-Schnittstelle (15) zu befestigen,
**dadurch gekennzeichnet, dass** die radiale Aussparung (42) mittels plastischer Materialumformung (41) in das Polgehäuse (18) eingedrückt ist, wobei der eingedrückte Wandbereich (59) als ebene Fläche ausgebildet, an der nach der Montage in die Getriebe-Schnittstelle (15) die Befestigungsstege (53) anliegen.

2. Elektromotor (10) nach Anspruch 1, **dadurch gekennzeichnet, dass** die radiale Aussparung (42) am Lagerdeckel (26) oder am Mantel (20) des Polgehäuses (18) angeformt ist.

3. Elektromotor (10) nach einem der Ansprüche 1 oder 2, **dadurch gekennzeichnet, dass** der Lagerdeckel (26) einstückig mit dem Mantel (20) des Polgehäuses (18) aus Metall - insbesondere mittels Tiefziehverfahren - gebildet ist.

4. Elektromotor (10) nach einem der vorhergehenden Ansprüche, **dadurch gekennzeichnet, dass** der Lagerdeckel (26) eine zentrale Öffnung (40) aufweist, durch die die Ankerwelle (32) oder eine in die Ankerwelle (32) eingreifende Getriebewelle (96) - insbesondere eine Flexwelle (96) - greift.

5. Elektromotor (10) nach einem der vorhergehenden Ansprüche, **dadurch gekennzeichnet, dass** der Wandbereich (59) mittels eines Stempelwerkzeugs eingedrückt wird.

6. Elektromotor (10) nach einem der vorhergehenden Ansprüche, **dadurch gekennzeichnet, dass** der Elektromotor (10) radial in einen Teil des Getriebegehäuses (16) eingelegt wird, wobei mindestens ein Befestigungssteg (53) des Getriebegehäuses (16) in die mindestens eine radiale Aussparung (42) des Polgehäuses (18) eingreift.

7. Elektromotor (10) nach einem der vorhergehenden Ansprüche, **dadurch gekennzeichnet, dass** die radiale Aussparung (42) in einem Bereich (57) des Polgehäuses (18) angeordnet ist, der einen geringeren Außendurchmesser (44) aufweist, als der Außendurchmesser (48) des Polgehäuse-Mantels (20, 21).

8. Elektromotor (10) nach einem der vorhergehenden Ansprüche, **dadurch gekennzeichnet, dass** zwischen den radialen Aussparungen (42) am Polgehäuse (18) in Umfangsrichtung (108) kreisbogenförmige Bereiche (106) des Polgehäuses (18) angeordnet sind.

9. Elektromotor (10) nach einem der vorhergehenden Ansprüche, **dadurch gekennzeichnet, dass** die radiale Aussparungen (42) radial gegenüberliegend angeordnet sind.

10. Elektromotor (10) nach einem der vorhergehenden Ansprüche, **dadurch gekennzeichnet, dass** der Polgehäuse-Mantel (20) doppelwandig ausgeführt ist.

11. Elektromotor (10) nach einem der vorhergehenden Ansprüche, **dadurch gekennzeichnet, dass** der Lagerdeckel (26) einen axialen Zentrierzapfen (50) zum Eingriff in eine korrespondierende Gegenausformung (52) der Getriebe-Schnittstelle (15) oder eines Getriebegehäuses (16) aufweist.

12. Getriebe-Antriebseinheit (12) mit einem Elektromotor (10) nach einem der vorhergehenden Ansprüche und einem Getriebegehäuse (16), **dadurch gekennzeichnet, dass** das Getriebegehäuse (16) mindestens einen radialen Befestigungssteg (53) zum Eingriff in die radiale Aussparung (42) aufweist.

13. Getriebe-Antriebseinheit (12) nach Anspruch 12, **gekennzeichnet durch** mindestens zwei radial miteinander verbindbaren Gehäuseschalen (62, 63).

14. Getriebe-Antriebseinheit (12) nach einem der Ansprüche 12 oder 13, **dadurch gekennzeichnet, dass** das Getriebegehäuse (16) mindestens zwei, insbesondere vier Befestigungsstege (53) aufweist, die mittels axialen Halteelementen (55) mit dem Getriebegehäuse (16) verbunden sind.

15. Elektromotor (10) nach einem der Ansprüche 1 bis 11 mit einem Adapterelement (13), das mit Befestigungsstegen (53) in die Aussparungen (42) des Polgehäuses (18) eingreift, wobei das Adapterelement (13) radiale und/oder axiale Fortsätze (27) aufweist, die in Gegenausformungen einer Getriebe-Schnittstelle (15, 16) eingreifbar sind.

## Claims

1. Electric motor (10) for actuating drives in the motor vehicle having an armature shaft (32) which is mounted in a pole casing (18) which has a shell (20) and, on at least one end side (22, 24), a bearing cap (26, 28) for receiving a bearing (30) for the armature shaft (32), at least one radial cut-out (42) being configured on the pole casing (18), which at least one radial cut-out (-42) is suitable, after the complete assembly of the pole casing (18), for an engagement of at least one radial fastening web (53) of a transmission interface (15) into the pole casing (18), in order to fasten the electric motor (10) to the transmission interface (15), **characterized in that** the radial cut-out (42) is pressed into the pole casing (18) by means of plastic material reshaping (41), the pressed-in wall region (59) being configured as a planar surface, against which the fastening webs (53) bear after the assembly into the transmission interface (15).

2. Electric motor (10) according to Claim 1, **characterized in that** the radial cut-out (42) is integrally formed on the bearing cap (26) or on the shell (20) of the pole casing (18).

3. Electric motor (10) according to either of Claims 1 and 2, **characterized in that** the bearing cap (26) is formed in one piece with the shell (20) of the pole casing (18) from metal, in particular by means of deep-drawing methods.

4. Electric motor (10) according to one of the preceding claims, **characterized in that** the bearing cap (26) has a central opening (40), through which the armature shaft (32) or a transmission shaft (96) which engages into the armature shaft (32) (in particular, a flex-shaft (96)) reaches.

5. Electric motor (10) according to one of the preceding claims, **characterized in that** the wall region (59) is pressed in by means of a stamp tool.

6. Electric motor (10) according to one of the preceding claims, **characterized in that** the electric motor (10) is inserted radially into a part of the transmission housing (16), at least one fastening web (53) of the transmission housing (16) engaging into the at least one radial cut-out (42) of the pole casing (18).

7. Electric motor (10) according to one of the preceding claims, **characterized in that** the radial cut-out (42) is arranged in a region (57) of the pole casing (18), which region (57) has a smaller external diameter (44) than the external diameter (48) of the pole casing shell (20, 21).

8. Electric motor (10) according to one of the preceding claims, **characterized in that** arcuate regions (106) of the pole casing (18) are arranged in the circumferential direction (108) between the radial cut-outs (42) on the pole casing (18).

9. Electric motor (10) according to one of the preceding claims, **characterized in that** the radial cut-outs (42) are arranged so as to lie radially opposite one another.

10. Electric motor (10) according to one of the preceding claims, **characterized in that** the pole casing shell (20) is of double-walled configuration.

11. Electric motor (10) according to one of the preceding claims, **characterized in that** the bearing cap (26) has an axial centring pin (50) for engaging into a corresponding complementary shaped-out formation (52) of the transmission interface (15) or of a transmission housing (16).

12. Transmission/drive unit (12) having an electric motor (10) according to one of the preceding claims and a transmission housing (16), **characterized in that** the transmission housing (16) has at least one radial fastening web (53) for engaging into the radial cut-out (42) .

13. Transmission/drive unit (12) according to Claim 12, **characterized by** at least two housing shells (62, 63) which can be connected radially to one another.

14. Transmission/drive unit (12) according to either of Claims 12 and 13, **characterized in that** the transmission housing (16) has at least two, in particular four fastening webs (53) which are connected to the transmission housing (16) by means of axial holding elements (55).

15. Electric motor (10) according to one of Claims 1 to 11 having an adapter element (13) which engages by way of fastening webs (53) into the cut-outs (42) of the pole casing (18), the adapter element (13) having radial and/or axial projections (27) which can engage into complementary shaped-out formations of a transmission interface (15, 16).

## Revendications

1. Moteur électrique (10) pour actionneur dans un véhicule, doté d'un arbre d'induit (32), lequel est disposé dans un stator (18) comportant une gaine (20) et un chapeau de palier (26, 28) sur au moins une face frontale (22, 24) destiné à accueillir un palier (30) pour l'arbre d'induit (32), dans lequel sur le stator (18) au moins une échancrure radiale (42) est formée, laquelle est adaptée pour que le stator (18) soit en prise avec au moins une traverse de fixation (53) d'une interface de transmission (15) après l'assemblage complet du stator (18), afin de fixer le moteur électrique (10) à l'interface de transmission (15), **caractérisé en ce que** l'échancrure radiale (42) est imprimée dans le stator (18) par déformation de matière plastique (41), dans lequel la zone de paroi imprimée (59) est conçue comme surface plane, sur laquelle les traverses de fixation (53) reposent après le montage dans l'interface de transmission (15).

2. Moteur électrique (10) selon la revendication 1, **caractérisé en ce que** l'échancrure radiale (42) est formée sur le chapeau de palier (26) ou sur la gaine (20) du stator (18).

3. Moteur électrique (10) selon l'une des revendications 1 ou 2, **caractérisé en ce que** le chapeau de palier (26) est conçu d'une seule pièce en métal, en particulier au moyen d'un procédé d'emboutissage, avec la gaine (20) du stator (18).

4. Moteur électrique (10) selon l'une des revendications ci-dessus, **caractérisé en ce que** le chapeau de palier (26) comporte une ouverture centrale (40), au travers de laquelle l'arbre d'induit (32) ou un arbre de transmission (96) en prise avec l'arbre d'induit (32), en particulier un arbre flexible (96), peut fonctionner.

5. Moteur électrique (10) selon l'une des revendications ci-dessus, **caractérisé en ce que** la zone de paroi (59) est imprimée au moyen d'un outil de poinçonnage.

6. Moteur électrique (10) selon l'une des revendications ci-dessus, **caractérisé en ce que** le moteur électrique (10) est disposé radialement dans une partie du boîtier de transmission (16), dans lequel au moins une traverse de fixation (53) du boîtier de transmission (16) entre en prise dans l'au moins une échancrure radiale (42) du stator (18).

7. Moteur électrique (10) selon l'une des revendications ci-dessus, **caractérisé en ce que** l'échancrure radiale (42) est agencée dans une zone (57) du stator (18), laquelle possède un diamètre extérieur (44) inférieur au diamètre extérieur (48) de la gaine du stator (20, 21).

8. Moteur électrique (10) selon l'une des revendications ci-dessus, **caractérisé en ce que** des zones en arc de cercle (106) du stator (18) sont agencées entre les échancrures radiales (42) sur le stator (18) dans la direction du pourtour (108).

9. Moteur électrique (10) selon l'une des revendications ci-dessus, **caractérisé en ce que** les échancrures radiales (42) sont agencées en opposition radiale.

10. Moteur électrique (10) selon l'une des revendications ci-dessus, **caractérisé en ce que** la gaine du stator (20) est fabriquée à double paroi.

11. Moteur électrique (10) selon l'une des revendications ci-dessus, **caractérisé en ce que** le chapeau de palier (26) comporte une dent de centrage axiale (50) entrant en prise avec une contre-forme correspondante (52) de l'interface de transmission (15) ou d'un boîtier de transmission (16).

12. Unité d'entraînement et de transmission (12) dotée d'un moteur électrique (10) selon l'une des revendications ci-dessus et d'un boîtier de transmission (16), **caractérisée en ce que** le boîtier de transmission (16) comporte au moins une traverse de fixation radiale (53) entrant en prise dans l'échancrure radiale (42).

13. Unité d'entraînement et de transmission (12) selon la revendication 12, **caractérisée par** au moins deux coques de boîtier (62, 63) raccordables radialement l'une à l'autre.

14. Unité d'entraînement et de transmission (12) selon l'une des revendications 12 ou 13, **caractérisée en ce que** le boîtier de transmission (16) comporte au moins deux, en particulier quatre, traverses de fixation radiales (53), lesquelles sont raccordées au boîtier de transmission (16) au moyen d'éléments de maintien axiaux (55).

15. Moteur électrique (10) selon l'une des revendications 1 à 11 doté d'un élément adaptateur (13), lequel entre en prise avec des traverses de fixation (53) dans les échancrures (42) du stator (18), dans lequel l'élément adaptateur (13) comporte des prolongements (27) radiaux et/ou axiaux, lesquels peuvent entrer en prise avec des contre-formes d'une interface de transmission (15, 16).
